# EUROPEAN PATENT SPECIFICATION

(11) **EP 2 014 726 B1**
(45) Date of publication and mention of the grant of the patent: **08.05.2019**
(21) Application number: 08153495.0
(22) Date of filing: 28.03.2008
(51) Int. Cl.: C09D 5/00, C09D 7/40, E01C 1/00, C08K 3/22, E01C 7/18, C09D 7/61

(54) **PHOTOCATALYTIC COMPOSITION APPLICABLE TO BITUMINOUS SURFACES AND USE THEREOF**
PHOTOKATALYTISCHE ZUSAMMENSETZUNG VERWENDBAR ZU BITUMINÖSEN FLÄCHEN UND DESSEN VERWENDUNG
COMPOSITION PHOTOCATALYTIQUE APPLICABLE AUX SURFACES BITUMEUSES ET LEUR UTILISATION

(30) Priority: 12.07.2007 IT MI20071398
(43) Date of publication of application: 14.01.2009
(73) Proprietor: Impresa Bacchi S.r.l., 20097 San Donato Milanese (Milan) (IT)
(72) Inventor: Bacchi, Mauro, 20080 Carpiano (Milan) (IT); Giavarini, Carlo, 00184 Rome (IT); Santarelli, Maria Luisa, 00184 Rome (IT)
(74) Representative: Bottero, Carlo

(56) References cited:
- EP-A- 1 020 564
- EP-A- 1 752 429
- WO-A-2005/012642
- WO-A-2005/083013
- FR-A- 2 183 267
- US-A1- 2004 198 625
- STANISLAW SLOMKOWSKI ET AL: "Terminology of polymers and polymerization processes in dispersed systems (IUPAC Recommendations 2011)", PURE AND APPLIED CHEMISTRY, vol. 83, no. 12, 1 January 2011 (2011-01-01), pages 2229-2259, XP055103278, ISSN: 0033-4545, DOI: 10.1351/PAC-REC-10-06-03
- AKIRA FUJISHIMA ET AL: "Titanium dioxide photocatalysis", JOURNAL OF PHOTOCHEMISTRY AND PHOTOBIOLOGY C: PHOTOCHEMISTRY REV, ELSEVIER, AMSTERDAM, NL, vol. 1, no. 1, 29 June 2000 (2000-06-29), pages 1-21, XP008133652, ISSN: 1389-5567, DOI: 10.1016/S1389-5567(00)00002-2 [retrieved on 2000-11-22]

## Description

The present invention relates to a photocatalytic composition applicable to bituminous surfaces and the use thereof. In particular, the present invention relates to a photocatalytic composition for the abatement of atmospheric pollutants.

The present invention falls within the technical field of modifications of bituminous surfaces with photocatalytic compositions capable of abating the pollutants present in the air by means of photocatalysis processes.

The atmospheric pollution caused by exhaust gas emissions of motor vehicles represents one of the most important environmental problems on a world-wide scale. The main pollutants are nitrogen oxides (NOx), sulfur oxides (SOx), ozone (O₃) and particle material (particulate) .

Among the most promising techniques for reducing atmospheric pollution due to these substances, techniques based on the use of photocatalysts applied to bituminous surfaces of road paving or to cementitious conglomerates and/or based on lime used for architectural coatings (for example wall surfaces, roofs, etc.), have been recently identified.

In the above applications, the photocatalytic compositions are used in the form of fine coating films of road and/or cementitious surfaces.

The photocatalysts used for these applications are catalytic compounds capable of promoting conversion reactions of atmospheric pollutants into less harmful chemical substances through their interaction with the polluting molecules and the contemporaneous exposure to electromagnetic radiations having a suitable frequency. The most widely-used photocatalysts for this type of application are those based on TiO₂, ZnO₂ and other oxidation catalysts.

In the state of the art, the use of photocatalytic compositions applied to bituminous surfaces of road paving (modified road surfaces) is accompanied by various problems which considerably limit the efficacy of this abatement technique of atmospheric pollution. More specifically, the use of photocatalytic compositions applied to road surfaces is greatly influenced by the reduced flexibility and adhesion of the coating films containing the photocatalyst and their poor adhesion to the bituminous road surface. These defects lead to a rapid deterioration of the coating film and its progressive detachment, with a consequent loss in efficacy of the abatement capacity of the pollutants on the part of the bituminous surface.

Another problem connected with modifications of road surfaces with photocatalysts is represented by a deterioration in the intrinsic properties of the road surface. As a result of the presence of the coating film containing the photocatalytic composition, in fact, the road surface often offers a poorer adherence to motor vehicle tyres.

In the case of draining and sound-absorbing road surfaces, the application of the surface photocatalytic coating film, generally based on TiO₂ dispersed in cementitious materials, causes the filling of the interstices present in the asphalt road surface, originally porous. The filling of the pores has at least three disadvantages:
- the photocatalytic composition entrapped in the most internal pores of the asphalt road surface is much less effective in the abatement of pollutants with respect to that present on the surface coating, as it has a low exposure to electromagnetic radiation (solar light) capable of activating the catalytic conversion processes of the pollutants;
- the asphalt road surface loses its draining and/or sound-absorbing properties due to the blockage of the porous interstices;
- the costs associated with effecting these applications on draining and sound-absorbing asphalts are rather high due to the excess of photocatalytic composition which must be added for compensating the quantity of composition which penetrates the most internal pores of the bituminous surface.

The necessity is therefore greatly felt for availing of photocatalytic compositions capable of effectively adhering to bituminous surfaces, in particular road surfaces, applicable in the form of a resistant coating film which, at the same time, does not alter the draining, sound-absorbing and antislip capacities of the surfaces themselves.

WO 2005083013 A1 discloses a coating composition for the formation of an inorganic layer on the surface of a substrate, comprising at least: an efficient amount of photocatalytic titanium dioxide particles, an opacifying agent, particles of an inorganic binder, an organic binder, and a solvent, wherein said organic binder and photocatalytic titanium dioxide particles are present in a weight ratio, photocatalytic titanium dioxide/organic binder ranging from 0.1 to 6. The coating is intended for application on material such as: metals, ceramics, glasses, woods, stones, cements and concretes.

EP 1020564 A1 discloses a road surface at least partly covered by a photocatalyst layer containing a photocatalyst such as titanium dioxide, to purify pollutants in exhaust gases emitted from vehicles by photocatalytic reaction of the photocatalyst. In one embodiment, the photocatalyst layer is formed by injecting or spraying a mixture comprising titanium dioxide, cement, a filler and water onto the road surface.

WO 2005/012642 A1 discloses a method and composition for treating a weathered low traffic volume asphalt surface. The method comprising the steps of providing a composition comprising a solution, emulsion or dispersion of a polymer material, particulate material, rheology modifiers, processing aids, and UV absorbers, wherein the composition is essentially free of bituminous components and is essentially free of cement; and applying the composition to the asphalt surface. The composition and method are intended for use on weathered low-traffic volume road surfaces to protect the degraded asphalt surface from further disintegration, without being abraded by the action of vehicle tyres.

FR 2183267 discloses a road sign material containing (I) a binder, (II) inorganic and/or organic pigments and fillers, (III) glass beads, and (IV) an inorganic polycrystalline material with (a) a density of 2.20-4.30, (b) a Mohs hardness of >=5, (c) a particle size of >0.01 mm and (d) a degree angularity >1.0.

US 2004198625 A1 discloses a cleaning compositions including a photocatalytic material and a sensitiser which employ a photocatalytic material and a sensitiser at a locus, for example on a surface. The compositions are intended for cleaning surfaces such as ceramic tiles, sinks, baths, washbasins, toilets, work surfaces, ovens, hobs, carpets, fabric, floors, and the like.

An object of the present invention therefore relates to the use of a photocatalytic composition for the abatement of atmospheric pollutants, said composition being applied to a bituminous surface, comprising at least one photocatalyst dispersed in an organic dispersing phase, wherein:said organic dispersing phase is an aqueous emulsion;the photocatalyst is present in a concentration ranging from 1 to 25% by weight with respect to the total weight of the composition;the organic dispersing phase is present in a concentration ranging from 75 to 99% by weight with respect to the total weight of the composition;the organic dispersing phase comprises one or more polymeric and/or oligopolymeric organic resins in a quantity ranging from 10 to 80% by weight with respect to the total weight of the organic dispersing phase, said one or more resins being selected from the group of acrylic resins, methacrylic resins and mixtures thereof.

A further object of the present invention relates to an application method of the above photocatalytic composition to bituminous surfaces comprising the distribution of the composition by spraying onto a bituminous surface.

The photocatalytic composition, object of the present invention, comprises a photocatalyst selected from TiO₂, ZrO₂, Ta₂O₅, Cu₂O, BiO and/or mixtures thereof. The photocatalyst is preferably TiO₂, even more preferably it is TiO₂ in the form of anatase, as it is the catalyst which has shown the greatest efficacy in the abatement of pollutants.

The photocatalyst used for the preparation of the photocatalytic composition is in the form of a powder and/or granules having varying dimensions, preferably with an average particle-size ranging from 10⁻⁹ mm to 10⁻¹ mm, even more preferably lower than 0.044 mm (325 mesh).

The organic dispersing phase in which the photocatalyst is dispersed comprises a polymeric and/or oligopolymeric organic resin selected from the group of acrylic, methacrylic, polysiloxane, silane, ethyl-vinyl-acetate (EVA), styrene-butadiene-styrene (SBS) and/or hydrocarbon resins and/or mixtures thereof
The hydrocarbon resins can be resins coming, for example, from C₅-C₁₀ fractions of steam cracking processes of oil fractions.

For the purposes of the present invention, other types of resins can be used provided they are liquid or easily liquefiable by heating, or dispersible in a diluent, with at least weakly polar characteristics and having double bonds and/or heteroatoms (O, N, S) in addition to carbon and hydrogen.

The resin included in the organic dispersing phase is a resin of the acrylic type.

In a preferred embodiment of the invention, the polymeric resin is dispersed in water in the presence of an emulsifying agent of the anionic or cationic type until a homogeneous dispersion is obtained in the form of an emulsion. The emulsifying agents used are those typically adopted in the field and available on the market. Alternatively, emulsions of organic polymers available on the market can be used as dispersing phases.

The photocatalytic composition can be prepared by mixing all the ingredients contemporaneously in a homogenizer or, alternatively, by adding the photocatalyst to the organic dispersing phase and mixing until a homogeneous dispersion is obtained. In a preferred embodiment, the final photocatalytic composition is obtained by adding the photocatalyst in the form of powder and/or granules to the organic dispersing phase and mixing to disperse and keep the photocatalyst in dispersion.

The mixing phase c) until a homogeneous mixture is obtained, is preferably carried out at a temperature ranging from 20 to 60°C.

Furthermore, phase c) is preferably carried out continuously for a time varying from 5 to 60 minutes.

The preferred dispersing phase is that in emulsion, preferably in the form of a microemulsion, which is prepared by preliminarily homogenizing in phase a) the preselected polymer in water with the help of commercial emulsifying agents, by means of homogenizers.

All the mixing steps can be effected with mechanical stirrers (for example of the helix, turbine or Silverson type) or with other types of mixers.

It has sometimes been observed that the photocatalytic compositions thus prepared can, with time, encounter separation phenomena of the photocatalyst from the organic dispersing phase. In this case, the original state of the dispersion of the photocatalyst in the photocatalytic composition can be re-established by simple stirring of the composition.

The photocatalytic composition according to the present invention comprises:
- one or more photocatalyst compounds in a quantity ranging from 1 to 25% by weight, with respect to the total weight of the composition, more preferably from 8 to 10% by weight, with respect to the total weight of the composition;
- an organic dispersing phase in a concentration ranging from 75 to 99% by weight, more preferably from 88 to 92% by weight, with respect to the total weight of the composition.

The organic dispersing phase comprises:
- one or more polymeric and/or oligopolymeric organic resins in a quantity ranging from 10 to 80% by weight, more preferably from 60 to 80% by weight, with respect to the total weight of the organic dispersing phase and
- other optional components, such as water, diluents, emulsifying agents and/or stabilizers, present with a total concentration equal to the complement to 100, with respect to the total weight of the organic dispersing phase.

When the photocatalytic composition is prepared by adding the photocatalyst to the organic dispersing phase comprising a polymeric organic resin, water and emulsifying agents, the polymeric organic resin is present in a concentration ranging from 10 to 80% by weight with respect to the total weight of the organic dispersing phase. The concentration of the emulsifying agent can vary from 0.2 to 1% by weight with respect to the total weight of the organic dispersing phase.

There are numerous procedures of use of the photocatalytic composition according to the present invention. In particular, it is possible to use the photocatalytic composition according to the present invention in a combination with all the bituminous surfaces applicable on surfaces exposed to electromagnetic radiations having a suitable wave-length for activating the photocatalytic processes, such as bituminous road surfaces and those destined for the coating of roofs or other architectural surfaces (wall surfaces, roofs, etc.).

In a preferred application embodiment, the above photocatalytic composition is applied to various kinds of bituminous road surfaces (closed, open, draining, sound-absorbing road surfaces, cast asphalts, etc.).

The application of the photocatalytic composition to the road surface can be effected by distributing the composition on the road surface.

Various application methods of the photocatalytic composition on bituminous surfaces have been experimented, based on different techniques such as: vaporization, spraying, roll application, brush application, rubber doctor blade application, etc.. The technique which has given the best results in terms of distribution homogeneity of the photocatalytic composition has proved to be spraying.

For this purpose, a spray rod equipped with suitably sized nozzles can be conveniently used, in which the photocatalytic composition is fed under pressure by means of an appropriate pumping system capable of ensuring a pressure ranging from 1 to 6 bar. The pressure necessary for effecting the application of the composition onto the road surface depends on the density of the photocatalytic composition and the quantity thereof to be distributed onto the road surface.

In a preferred embodiment, the spray rod is assembled on a moveable means equipped with a tank with a stirrer and pumping system of the photocatalytic composition from the tank to the spray rod.

The quantity of photocatalytic composition supplied is regulated on the basis of the velocity of the moveable means which carries it. Typically, from 100 to 1,000 grams of the photocatalytic composition per square metre of the bituminous surface are supplied; 500-600 g/m² are generally supplied for application on conventional asphalts of the close type, and higher quantities for draining surfaces.

The application of the photocatalytic composition can be effected on both freshly laid bituminous surfaces (hot) and on bituminous surfaces which have been laid for some time (cold).

The efficacy of the photocatalytic compositions according to the present invention applied to bituminous road surfaces in the abatement of atmospheric pollutants is demonstrated by the results of different experimental tests effected by the Applicant.

A quantitative evaluation of the efficacy of the photocatalytic compositions was carried out using a conditioning chamber made of Plexiglas produced so as to contain test samples of bituminous surfaces modified with the photocatalyst in the form of sheets having dimensions of up to 100 x 80 cm of surface, in the form of "cores" having a diameter of about 10 cm or in the form of blocks of asphalt conglomerate.

The conditioning chamber used for the experimental tests has a total overall volume of about 400 litres, reducible according to the conditions to be effected in the test, and it is equipped with holes for the entrance and exit of a flow of test gas, consisting of one of the following mixtures:
- nitrogen oxide (NO) in nitrogen;
- nitrogen dioxide (NO₂) in nitrogen;
- nitrogen oxide (NO) and nitrogen dioxide (NO₂) in nitrogen.

The inlet and outlet of the chamber are equipped with gas analyzers of the chemiluminescence detector type capable of determining the concentration of nitrogen oxide in the flow at the inlet and outlet from the chamber. A light source with a variable wave-length allows exposure of the modified surface to solar radiation to be simulated, establishing the suitable conditions for activating the conversion reactions of the pollutants.

The gaseous mixtures used as test gas contain percentages varying from 0.7 ppm to 0.5% by volume of nitrogen oxide (NO) or nitrogen dioxide (NO₂), or a mixture of nitrogen oxide/nitrogen dioxide (NO/NO₂), in which NO and NO₂ are present in a molar ratio of 1:1, in nitrogen. The tests were carried out under a continuous flow of the test gas, measuring the variation in the composition of the gas in real time.

The measurements effected in these experiments showed that all the photocatalytic compositions applied to the various test-samples are effective in reducing the concentration of NO present in the test gas. The abatement percentages proved to vary from 20 to 80% of the concentration of NO in the test gas. The photocatalytic compositions based on TiO₂ (10% by weight with respect to the catalytic composition) dispersed in an organic dispersing phase consisting of a polyacrylic resin in emulsion (concentration of the resin in the organic dispersing phase equal to 70% by weight of the dispersing phase), proved to be particularly effective, with an abatement of 75-80%.

Adherence tests (skid resistance) of motor vehicle tyres were carried out on road surfaces modified with the photocatalytic compositions according to the present invention. The photocatalytic composition was applied in experimental road sections.

Adherence losses of the tyres on the modified road surface with respect to the non-modified road surface, were generally not observed in these tests. Slight differences with respect to the non-modified surface were observed in relation to some specific photocatalytic compositions, the application procedure and/or the quantities applied. It was also observed that the adherence of the tyres to the road surface improves if the surface is modified with photocatalytic compositions to which any type of titanium dioxide with a particle-size greater than 0.2 mm and/or calcareous and/or silica sand have been added, in quantities varying from 1% to 25% by weight with respect to the weight of the photocatalyst. The influence on the photocatalysis of titanium having a particle-size greater than 0.2 mm is negligible.

Permeability tests were carried out on porous draining surfaces modified with the photocatalytic compositions according to the present invention. The tests showed that the compositions according to the present invention do not significantly alter the porosity characteristics of draining road surfaces and consequently do not significantly modify the draining characteristics of the conglomerates.

Aging tests of the photocatalytic compositions in emulsion-form were effected by means of treatment in an aerated oven at 100°C for 96 hours and contemporaneous UV irradiation. All the compositions subjected to the test showed a high resistance to aging evaluated by the permanence of the white colour of the composition and non-alteration of the polymers forming the organic dispersing phase.

Experimental tests carried out on highly frequented roads and extensive surfaces also confirmed the good duration of the application and efficacy of the photocatalytic compositions in the abatement of pollutants also various months after the application.

The following examples are provided for purely illustrative and non-limiting purposes of the present invention.

### EXAMPLE 1

An emulsion of acrylic resin and a photocatalyst TiO₂ in fine powder form (of the anatase type, particle-size 0.044 mm (325 mesh) is added to a Silverson LAR mixer equipped with a homogenizer head and mixing recipient having a capacity of 1 litre, in a quantity equal to 10% by weight with respect to the resin emulsion, i.e. the organic dispersing phase. The emulsion was prepared by dispersing 30% by weight of the resin in 69% by weight of water and 1% by weight of cationic emulsifying agents. The mixture containing TiO₂ is kept under stirring at room temperature for about 30 minutes until a homogeneous white-coloured mixture is obtained.

### EXAMPLE 2

The same photocatalytic composition as Example 1 was prepared using for the mixing a helix mechanical stirrer, obtaining a homogeneous white-coloured mixture the same as that obtained in Example 1.

### Reference EXAMPLE 3

10% by weight with respect to the total weight of the photocatalytic composition of the TiO₂ photocatalyst and 90% by weight of an organic dispersing phase (still with respect to the total weight of the photocatalytic composition) are mixed at room temperature in a homogenizer of the IKA type rotating at 8, 000 revs/min⁻¹ and with a 1-litre mixing recipient, said organic dispersing phase consisting of 80% by weight of a hydrocarbon resin (C₅-C₁₀) from steam cracking diluted in 20% by weight of paraffin-naphthene oil (with respect to the total weight of the organic dispersing phase). The photocatalyst used is in the form of a fine powder (of the anatase type, particle-size 0.044 mm (325 mesh). The mixture is kept under stirring for about 30 minutes until a homogeneous white-coloured mixture is obtained.

### Reference EXAMPLE 4

A liquid polysiloxane resin and a photocatalyst of the TiO₂ type is added to a Silverson LAR mixer equipped with a homogenizer head and mixing container having a capacity of 1 litre. The TiO₂ is added in the form of a fine powder (0.044 mm (325 mesh), in a quantity equal to 10% by weight with respect to the resin. The mixture is stirred for 30 minutes until a homogeneous white-coloured mixture is obtained.

### Reference EXAMPLE 5

The same photocatalytic composition as Example 4 was prepared using for the mixing a helix mechanical mixer, obtaining a homogeneous white-coloured mixture the same as that obtained in Example 4.

### Reference EXAMPLE 6

Water, a liquid silane resin and the TiO₂ photocatalyst are added to a homogenizer of the IKA type rotating at 8000 revs/min⁻¹ and with a 1-litre mixing recipient. The liquid silane resin is added in a quantity equal to 30% by weight with respect to the water. The TiO₂ is added in the form of a fine powder (of the anatase type, variable particle-size 0.05 mm) in a quantity equal to 10% by weight with respect to the organic dispersing phase, i.e. the aqueous silane emulsion. The mixture is stirred for 45 minutes until a homogeneous white-coloured mixture is obtained.

### Reference EXAMPLE 7

The same photocatalytic composition as Example 6 was prepared using for the mixing a helix mechanical mixer, obtaining a homogeneous white-coloured mixture the same as that obtained in Example 6.

### EXAMPLE 8

The same photocatalytic composition as Example 1 was prepared using a commercial acrylic microemulsion as dispersing phase. A homogeneous white-coloured mixture the same as that obtained in Example 1, was obtained.

### EXAMPLE 9

The same photocatalytic composition as Example 4 was prepared using a commercial acrylic microemulsion as dispersing phase. A homogeneous white-coloured mixture the same as that obtained in Example 4, was obtained.

### EXAMPLE 10

The same photocatalytic composition as Example 6 was prepared using a commercial acrylic microemulsion as dispersing phase. A homogeneous white-coloured mixture the same as that obtained in Example 6, was obtained.

## Claims

1. Use of a photocatalytic composition for the abatement of atmospheric pollutants, said composition being applied to a bituminous surface, comprising at least one photocatalyst dispersed in an organic dispersing phase, wherein:
said organic dispersing phase is an aqueous emulsion;
the photocatalyst is present in a concentration ranging from 1 to 25% by weight with respect to the total weight of the composition;
the organic dispersing phase is present in a concentration ranging from 75 to 99% by weight with respect to the total weight of the composition;
the organic dispersing phase comprises one or more polymeric and/or oligopolymeric organic resins in a quantity ranging from 10 to 80% by weight with respect to the total weight of the organic dispersing phase, said one or more resins being selected from the group of acrylic resins, methacrylic resins and mixtures thereof.

2. Use of the composition according to claim 1, wherein said photocatalyst is selected from TiO₂, ZrO₂, Ta₂O₅, Cu₂O, BiO.

3. Use of the composition according to claim 1, wherein the photocatalyst is TiO₂ in the form of anatase.

4. Use of the composition according to any of the claims from 1 to 3, wherein the photocatalyst is in powder form with an average particle-size lower than 0.044 mm.

5. Use of the composition according to any of the claims from 1 to 4, wherein the organic dispersing phase comprises a polymeric and/or oligopolymeric resin and/or mixtures thereof and at least one emulsifying agent of the anionic and/or cationic type dispersed in water.

6. Use of the composition according to any of the claims from 1 to 5, wherein said polymeric and/or oligopolymeric resin is an acrylic resin.

7. Use of the composition according to any of the claims from 1 to 6, wherein the photocatalyst is present in a concentration ranging from 8 to 10% by weight with respect to the total weight of the composition.

8. Use of the composition according to any of the claims from 1 to 7, wherein the organic dispersing phase is present in a concentration ranging from 88 to 92% by weight with respect to the total weight of the composition.

9. Use of the composition according to claim 5, wherein the anionic and/or cationic emulsifying agent is present in a concentration ranging from 0.2 to 1% by weight with respect to the total weight of the organic dispersing phase.

10. Use of the composition according to any of the claims from 1 to 9 also comprising a concentration ranging from 1 to 25% by weight, with respect to the total weight of the photocatalyst, of calcareous and/or silica sand and/or of TiO₂ with a particle-size greater than 0.2 mm.

11. Use of a composition according to any of the claims from 1 to 10, wherein the bituminous surface is a road surface.

12. Use of the composition according to claim 11, wherein the bituminous surface is an architectural coating.

13. Use of the composition according to any of the claims from 1 to 10, comprising the distribution of the composition by spraying onto a bituminous surface such as a road surface.

14. Use of the composition according to claim 13, wherein the composition is distributed onto the bituminous surface such as a road surface in a quantity ranging from 100 to 1000 g of composition per square metre of bituminous surface.

## Patentansprüche

1. Verwendung einer photokatalytischen Zusammensetzung zur Verringerung von Luftschadstoffen, wobei die Zusammensetzung auf eine bituminöse Fläche aufgebracht wird, umfassend wenigstens einen, in einer organischen Dispersionsphase dispergierten Photokatalysator, wobei:
die organische Dispersionsphase eine wässrige Emulsion ist;
der Photokatalysator in einer Konzentration im Bereich von 1 bis 25 Gew.-%, bezogen auf das Gesamtgewicht der Zusammensetzung vorhanden ist;
die organische Dispersionsphase in einer Konzentration im Bereich von 75 bis 99 Gew.-%, bezogen auf das Gesamtgewicht der Zusammensetzung vorhanden ist;
die organische Dispersionsphase ein oder mehrere polymerische und/oder oligopolymerische, organische Harze in einer Menge im Bereich von 10 bis 80 Gew.-%, bezogen auf das Gesamtgewicht der organischen Dispersionsphase vorhanden ist, wobei das eine oder die mehreren Harze aus der Gruppe von Acrylharzen, Methacrylharzen und Gemischen davon ausgewählt sind.

2. Verwendung der Zusammensetzung nach Anspruch 1, wobei der Photokatalysator aus TiO₂, ZrO₂, Ta₂O₅, Cu₂O, BiO ausgewählt ist.

3. Verwendung der Zusammensetzung nach Anspruch 1, wobei der Photokatalysator TiO₂ in Anatasform ist.

4. Verwendung der Zusammensetzung nach einem der Ansprüche 1 bis 3, wobei der Photokatalysator in Form von Pulver mit einer durchschnittlichen Partikelgröße kleiner als 0,044 mm vorliegt.

5. Verwendung der Zusammensetzung nach einem der Ansprüche 1 bis 4, wobei die organische Dispersionsphase ein polymerisches und/oder oligopolymerisches Harz und/oder Gemische davon und wenigstens ein anionisches und/oder kationisches, in Wasser dispergiertes Emulgierungsmittel umfasst.

6. Verwendung der Zusammensetzung nach einem der Ansprüche 1 bis 5, wobei das polymerische und/oder oligopolymerische Harz ein Acrylharz ist.

7. Verwendung der Zusammensetzung nach einem der Ansprüche 1 bis 6, wobei der Photokatalysator in einer Konzentration im Bereich von 8 bis 10 Gew.-%, bezogen auf das Gesamtgewicht der Zusammensetzung vorhanden ist.

8. Verwendung der Zusammensetzung nach einem der Ansprüche 1 bis 7, wobei die organische Dispersionsphase in einer Konzentration im Bereich von 88 bis 92 Gew.-%, bezogen auf das Gesamtgewicht der Zusammensetzung vorhanden ist.

9. Verwendung der Zusammensetzung nach Anspruch 5, wobei das anionische und/oder kationische Emulgierungsmittel in einer Konzentration von 0,2 bis 1 Gew.-%, bezogen auf das Gesamtgewicht der organischen Dispersionsphase vorhanden ist.

10. Verwendung der Zusammensetzung nach einem der Ansprüche 1 bis 9, ferner umfassend eine Konzentration im Bereich von 1 bis 25 Gew.-%, bezogen auf das Gesamtgewicht des Photokatalysators, des Kalk- und/oder Quarzsandes und/oder des TiO₂ mit einer Partikelgröße größer als 0,2 mm.

11. Verwendung der Zusammensetzung nach einem der Ansprüche 1 bis 10, wobei die bituminöse Fläche ein Straßenbelag ist.

12. Verwendung der Zusammensetzung nach Anspruch 11, wobei die bituminöse Fläche eine Bautenbeschichtung ist.

13. Verwendung der Zusammensetzung nach einem der Ansprüche 1 bis 10, umfassend die Verteilung der Zusammensetzung durch Aufsprühen auf eine bituminöse Fläche, beispielsweise einen Straßenbelag.

14. Verwendung der Zusammensetzung nach Anspruch 13, wobei die Zusammensetzung auf die bituminöse Fläche, beispielsweise einen Straßenbelag, in einer Menge im Bereich von 100 bis 1000 g der Zusammensetzung pro Quadratmeter bituminöser Fläche verteilt wird.

## Revendications

1. Utilisation d'une composition photocatalytique pour la réduction de polluants atmosphériques, ladite composition étant appliquée sur une surface bitumineuse, comprenant au moins un photocatalyseur dispersé dans une phase de dispersion organique, dans laquelle :
ladite phase de dispersion organique est une émulsion aqueuse ;
le photocatalyseur est présent en une concentration allant de 1 à 25 % en poids par rapport au poids total de la composition ;
la phase de dispersion organique est présente en une concentration allant de 75 à 99 % en poids par rapport au poids total de la composition ;
la phase de dispersion organique comprend une ou plusieurs résines organiques polymériques et/ou oligopolymériques en une quantité allant de 10 à 80 % en poids par rapport au poids total de la phase de dispersion organique, ladite ou lesdites résines étant sélectionnées dans le groupe constitué des résines acryliques, des résines méthacryliques et leurs mélanges.

2. Utilisation de la composition selon la revendication 1, dans laquelle ledit photocatalyseur est sélectionné parmi TiO₂, ZrO₂, Ta₂O₅, Cu₂O, BiO.

3. Utilisation de la composition selon la revendication 1, dans laquelle le photocatalyseur est du TiO₂ sous forme d'anatase.

4. Utilisation de la composition selon l'une quelconque des revendications 1 à 3, dans laquelle le photocatalyseur est sous forme de poudre avec une taille moyenne de particules inférieure à 0,044 mm.

5. Utilisation de la composition selon l'une quelconque des revendications 1 à 4, dans laquelle la phase de dispersion organique comprend une résine polymérique et/ou oligopolymérique et/ou leurs mélanges et au moins un agent émulsifiant du type anionique et/ou cationique dispersé dans l'eau.

6. Utilisation de la composition selon l'une quelconque des revendications 1 à 5, dans laquelle ladite résine polymérique et/ou oligopolymérique est une résine acrylique.

7. Utilisation de la composition selon l'une quelconque des revendications 1 à 6, dans laquelle le photocatalyseur est présent en une concentration allant de 8 à 10 % en poids par rapport au poids total de la composition.

8. Utilisation de la composition selon l'une quelconque des revendications 1 à 7, dans laquelle la phase de dispersion organique est présente en une concentration allant de 88 à 92 % en poids par rapport au poids total de la composition.

9. Utilisation de la composition selon la revendication 5, dans laquelle l'agent émulsifiant anionique et/ou cationique est présent en une concentration allant de 0,2 à 1 % en poids par rapport au poids total de la phase de dispersion organique.

10. Utilisation de la composition selon l'une quelconque des revendications 1 à 9 comprenant également une concentration allant de 1 à 25 % en poids, par rapport au poids total du photocatalyseur, de sable calcaire et/ou siliceux et/ou de TiO₂ avec une taille de particules supérieure à 0,2 mm.

11. Utilisation d'une composition selon l'une quelconque des revendications 1 à 10, dans laquelle la surface bitumineuse est une surface de route.

12. Utilisation de la composition selon la revendication 11, dans laquelle la surface bitumineuse est un revêtement architectural.

13. Utilisation de la composition selon l'une quelconque des revendications 1 à 10, comprenant la répartition de la composition par pulvérisation sur une surface bitumineuse telle qu'une surface de route.

14. Utilisation de la composition selon la revendication 13, dans laquelle la composition est répartie sur la surface bitumineuse telle qu'une surface de route en une quantité allant de 100 à 1000 g de composition par mètre carré de surface bitumineuse.
